# EUROPEAN PATENT APPLICATION

(11) **EP 4 485 267 A1**
(43) Date of publication of application: **01.01.2025**
(21) Application number: 23182700.7
(22) Date of filing: 30.06.2023
(51) Int. Cl.: G06F 30/30, G06F 30/20, G06F 30/337, G06F 119/02

(54) **SAFETY-AWARE HIGH-LEVEL-SYNTHESIS SOLVER**

(71) Applicant: Siemens AG Österreich, 1210 Wien (AT)
(72) Inventor: Fischer, Bernhard, 2122 Wolkersdorf im Weinviertel (AT); Cech, Christian, 2483 Ebreichsdorf (AT); Chilku, Bekim, 1190 Wien (AT); Hinterstoisser, Thomas, 2102 Bisamberg (AT); Matschnig, Martin, 3430 Tulln (AT)
(74) Representative: Siemens Patent Attorneys

(57) **Abstract**

Present invention concerns a method for an automated design
process, the method comprising:
obtaining (A10) an initial high-level specification (105) of a design target;
modifying (A12) the initial high-level specification (105) to obtain a modified high-level specification (200), wherein the modifying is based on information pertaining to safety constraints (130, 135) applicable to the design target and based on information pertaining to safety functionality (140);
providing (A14) the modified high-level specification (200) as output.

The invention also concerns associated devices.

## Description

Present invention concerns approaches of using High-Level-Synthesis (HLS) for automated design, in particular for safety-relevant designs of circuitry, e.g., in the context of transportation and/or power supply.

### Background of the Invention

Implementation of safety-related functions requires a lot of additional development effort. System design is becoming increasingly more complex, but the development effort should be kept as low as economically possible. This situation adds constraints for handling the introduction of safety features when designing safety-critical systems. To deal with high complexity, system concepts are leveraged to higher abstraction levels (modeling languages, executable models, etc.). To save time and costs, source code may be generated out of these models, and then synthesized or compiled - possibly without any additional manual work included.

A well-known approach for automated design is High-Level Synthesis (HLS). One example HLS tool is the tool Catapult (Siemens EDA, former Mentor Graphics). An HLS tool may in general enables system modeling with high-level programming languages such as C/C++ (providing a high-level specification), and then generates Register-Transfer Level (RTL) code. This code is synthesized for a specific hardware device (e.g., FPGA, ASIC, or SOC).

Safety standards (e.g., IEC 61508) conformance is mandatory for safety-critical systems in the electronic domain. Safety may be enhanced by introducing known concepts such as redundancy and diversity. A problem is that the implementation of safety-related functions causes further development effort and modeling effort: A safety concept must be designed where several safety measures are evaluated to approach an optimized solution. This increases design and development costs, poses a source for potential implementation errors and reduces the readability of the models (i.e., too many distracting details in a model making it harder to read, potentially obfuscate important information).

### Disclosure of the Invention

A problem underlying the invention consists in providing an improved technique for automated design for design targets subject to safety constraints and/or requirements.

The invention solves the given problem by means of subject-matter defined in enclosed independent claims. Dependent claims describe preferred embodiments.

There is disclosed a method for an automated design process. The method comprises obtaining an initial high-level specification of a design target. The method also comprises modifying the initial high-level specification to obtain a modified high-level specification. The modifying is based on information pertaining to safety constraints applicable to the design target, and is based on information pertaining to safety functionality. Moreover, the method comprises providing the modified high-level specification as output, e.g., to an HLS tool. Accordingly, safety may be considered early on, e.g., before an HLS tool is utilized, in an automated manner.

The modifying may be based on information pertaining to functional requirement/s, and/or environment condition/s, and/or design constraint/s, and/or target technology. Such information may be obtained from one or more sources accessible, e.g., for a model modifier modifying the initial high-level specification. Such, a broad information background may be considered in an early design stage, e.g., before an HLS tool is utilized.

The initial high-level specification and/or the modified high-level specification may be in C/C++ and/or SystemC and/or MATLAB format. Such format/s may be consistent and well-defined, readable by a designer, and/or convenient to handle, manipulate and/or modify. It may be considered that the format of the initial and modified specifications may be the same; for example, modifying may exclude modifying the language and/or format; thus, consistency and low error probability may be achieved.

The method may further comprise performing High-Level Synthesis based on the modified high-level specification. High-Level Synthesis may be performed by utilizing an HLS tool, e.g., inputting the modified high-level specification into the tool, to determine an RTL model, and/or a synthesized design or target. This may be performed by a software or software suite, and/or computer system, operating both a model modifier and the HLS tool, e.g., allowing easy interfacing between components.

It may be considered that modifying may be performed by a model modifier, which may be a system component and/or implemented in software. It should be noted that a high-level specification may generally be considered a system model, modeling the design target and/or its functionality. Modifying a model may thus be considered modifying a high-level specification. An initial high-level specification may be considered an initial system model, and a modified high-level specification may be considered a modified system model.

It may be considered that information pertaining to safety functionality pertains to a voter functionality, and/or redundancy, and/or diversity, and/or lock-step functionality, and/or watchdog functionality.

Modifying in general may comprise adding safety functionality to the initial high-level specification, e.g., to fulfill one or more constraints. Information pertaining to safety constraints and/or information pertaining to safety functionality may be linked, e.g., such that it may be indicated which or how a functionality may fulfill a constraint, and/or which constraint may be fulfilled by which functionality.

In general, the modified high-definition specification may contain all functionality of the initial high-definition specification. Modifying may be considered to add functionality, but not remove it. Thus, the desired functionality of a design target may be ensured.

A computer program product is considered. The computer program product comprises instructions and/or program code or program code means causing processing circuitry and/or a computer system to perform a method as described herein, for example when executed by the processing circuitry and/or computer system. The computer program product may comprise one or more modules associated to each action of the method, e.g., a module for obtaining an initial system model, and/or a module for modifying the system model, and/or a module for providing the modified system model as output.

Moreover, a computer system for automated design is proposed. The computer system is adapted for performing a method as described herein, and/or for executing a computer program product as described herein.

Furthermore, a storage medium storing a computer program product as described herein is proposed. The storage medium may comprise and/or be implemented as one or more memories and/or have different parts or components of the program product stored on different memories or media. The storage medium may be non-transitory. It may be considered that the storage medium may be computer-readable.

The automated design process may be fully automated, or be based on additional input, e.g., provided by a designer; such an input may for example used during selection of an RTL model or RTL representation, and/or for modifying a high-level specification. The design process may have a design target, which may be represented by a RTL representation, e.g., of a high-level specification. The design target generally may represent, and/or pertain to, and/or be, hardware and/or circuitry and/or integrated circuitry, in particular a FPGA and/or ASIC and/or SOC, and/or may be represented by an RTL representation. An RTL representation or RTL model may in some cases be considered an output of the design process. Generally, an RTL representation or model may indicate functional components of circuitry to implement the high-level specification. The automated design process may be an EDA (Electronic Design Automation) process.

A high-level specification may indicate and/or define the functionality of a target, e.g., as algorithm/s. The high-level specification may be represented by a representation, e.g., in a high-level language (or a language combination). The representation may for example be in C/C++, and/or SystemC, and/or MATLAB. A high-level specification may be a representation of itself; in some cases, copies and/or modifications and/or transformations and/or reformulations (e.g., comprising reformatting) of a high-level specification may be considered representations of the high-level specification, in particular if the functionality and/or algorithm/s are maintained (with potential additional functionality provided, e.g., in terms of safety).

An initial high-level specification may define and/or represent the task/s to be fulfilled by a design target; safety requirements may be disregarded and/or only partially be considered. In general, a modified system model may be considered modified (e.g., changed, in particular comprising added functionality) relative to the initial system model.

In general, an HLS tool may be adapted to obtain, as input, a high-level specification (e.g., a system model), and based on this, may provide as an output, an RTL model and/or representation. The HLS tool may provide a plurality of operations, and/or may be utilized or utilizable in more than one iteration to achieve a satisfactory RTL model.

A computer system may comprise processing circuitry, and/or a computer system and/or processing circuitry may comprise one or more computers, and/or may comprise one or more components and/or may be a distributed system, e.g., interconnected via suitable communication interfaces. Different components may perform different actions, e.g., based on exchanging information via the interface/s. A computer system in general may be and/or comprise one or more computers and/or controllers and/or processing circuitries.

The method may especially be carried out, completely or in part, by electronic execution means like a computer system. To these ends, the method may be formulated as a computer program product with program code means (e.g., instructions, which may in general be computer-readable and/or computer-executable). The above described system may comprise the computer system. Advantages or features of the method may apply to the method and vice versa.

### Brief Summary of the Enclosed Figures

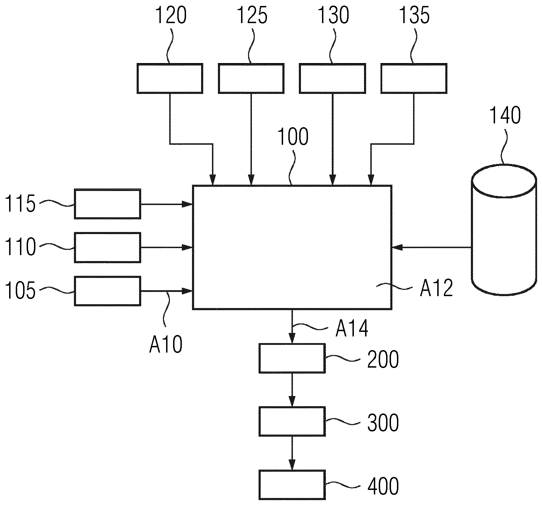

The above-described properties, features and advantages of present invention as well as the way they are achieved will be made clearer and better understandable in the light of the following discussion, making reference to exemplary embodiments shown in accompanying figure, in which
Figure 1 shows an exemplary HLS scenario.

### Detailed Exemplary Embodiments of the Invention

High-Level Synthesis (HLS) is an approach that transforms a behavioral description of high-level software components (functions) as input into Hardware Description Language (HDL) (and/or an RTL model) for generation of hardware components, e.g., in the context of automated design, in particular for circuitry. An input (high-level specification) can for example be written in C/C++ or SystemC or MATLAB language. In general, HLS may also be referred as C synthesis, electronic system-level synthesis, algorithmic synthesis or behavioral synthesis. HLS may be performed utilizing an HLS tool, which may refer to software and/or a software suite (a suite may in general have multiple components, which may be interfacing with each other), e.g., running on a computer system.

It may be generally considered that an automatic design may be an automatic circuity and/or electronics design, in particular design of integrated circuitry. The design may pertain to a design target, which may be hardware implementing a high-level specification and/or the functionality/ies of the high-level specification. The hardware may be represented by, and/or be integrated circuitry, in particular ASIC, or FPGA or SOC. Hardware designed by HLS may be referred to as synthesized hardware.

An HDL output may for example represent an RTL (Register-Transfer Level) output or report. Based on such a report, a design may be implemented in hardware.

Even though safety-related feature modeling and implementation are supported by electronic design automation (EDA) tools, the effort for reaching good solutions is still high. A minimal design flow with safety feature implementation and HLS may comprise implementing safety features (e.g., with tool support). The resulting final system model with safety measures may be synthesized for a target device or design target. Note that a safety-related design flow, such as in IEC 61508, demands a safety-standard compliant design flow.

There is proposed utilizing a model modifier, which may be adapted for modifying an initial system model, to be adapted for safety requirements. The modified system model may then be provided to an HLS tool.

A safety-aware High-Level Synthesis solver may be an example of a model modifier. An initial system model (high-level specification), for example written in C/C++, may be intended to be synthesized with an HLS tool (e.g., Catapult).

It is proposed to apply a safety-aware HLS-flow, for introducing safety features to a system model (high-level specification), followed by a synthesis for a target device (FPGA, SoC, ASIC).

Figure 1 shows an exemplary approach for introducing safety features. In particular, a safety-aware HLS Solver 100 (as an example for a specification modifier) may be considered. This solver 100 takes an initial system model 105 (e.g., written in C/C++), which it may read as an input, and/or from a file and/or memory; this may be considered an action A10 of obtaining an initial system model or initial high-level specification. The solver 100 may further consider information, e.g., variables or conditions or parameters or constraints, from one or multiple sources such as one or more sources for:
functional requirements 110 (e.g., in addition to functions provided by the initial system model); and/or
environment conditions 115 (e.g., temperature and/or radiation and/or humidity and/or localization, etc.); and/or
design constraints 120 (e.g., maximum area size, and/or power dissipation maximum); and/or
target technology 125 (e.g., a node size (which may be in nm), and/or area (e.g., in mm²), and/or power dissipation, and/or power supply, and/or isolation, and/or insulation (e.g., thermal and/or electrical)); and/or
safety constraints 130 (e.g., mandatory safety-related techniques from safety standards, and/or isolated power supplies, and/or requirement for multiple redundancy, e.g., triple-redundancy); and/or
non-functional requirements 135 (e.g., pertaining to safety requirement/s, and/or safety target/s, and/or reliability, and/or mean time between failures, and/or availability, and/or latency, and/or error rate).

In particular safety constraints 130, and/or non-functional requirements 135 (if associated to safety) may be considered information pertaining to safety constraint/s. A safety constraint may be applicable to a design target, e.g., such that the target has to fulfill such constraint/s.

The solver 100 may be able to access, and/or obtain, information (e.g., obtain the information), e.g., from one or more data sources 105-135, to which it may be connected via suitable interfaces. Data sources and/or databases in general may be separate, or may be implemented together, e.g., as one database covering different aspects of information.

Moreover, the solver 100 may comprise, and/or be connected to a database 140, which may be a Safety Building Block Library; database 140 may serve the solver 100 as a knowledge base for various safety mechanisms or functionality (such as redundancy, diversity, lock-step, voters, watchdogs with interrupts); the solver may be adapted to obtain corresponding information from the database 140, in particular information pertaining to safety functionality and/or mechanisms.

The Safety-aware HLS Synthesis solver 100 may be adapted to modify the initial system model 105, e.g., in an action A12 of modifying the initial system model (or initial high-level specification). Modifying may be based on information pertaining to safety, e.g., from source 130 and/or 135, and information pertaining to safety measures and/or functionality, e.g., from database/source 140. Modifying may be based on information from one or more additional sources (e.g., 110-125); such information may for example be considered in the context of safety constraint/s and/or functionality, and/or basic functionality of the initial system model. It may be considered that modifying is based on adding safety measure/s and/or associated functionality based on the information pertaining to safety constraint/s, e.g., to fulfill the constraint/s.

The solver 100 as an example for a model modifier may determine a modified model as solution for adding safety measures to the design, in particular an optimized solution. A modified system model (e.g., as a representation of a modified high-level specification) may be provided by the solver 100 as output in an action A14. For example, the solver 100 may conclude that adding redundancy (e.g., triplication and a voter) for a safety-critical circuit will increase the overall system reliability.

The techniques applied by the solver 100 can be based on various kinds of solver algorithms, as well as be based on neural nets or machine learning. The output of the Safety-aware High-Level-Synthesis Solver 100 is a modified system model 200, modified with safety measures, and/or with optimized safety measures. The modified system model may be a high-level specification or representation thereof, which may be provided as input for an HLS tool 300. The HLS tool 300 provides, as output, a design target, e.g., represented by an RTL model or RTL representation.

A design target or target device may in particular be a FPGA, SoC, or ASIC.

A model modifier like a safety-aware High-Level Synthesis Solver may automatically determines an optimized solution for the design with safety-features. Development time and costs may be saved compared to the current approach of manual optimization and implementation of safety features. Time-to-market may be reduced. Changes of (safety) requirements, safety constraints, environment conditions, target technologies may have minimized impact, because the design with safety features is generated by the Safety-aware High-Level Synthesis Solver. This may allow easy update to such changes.

The model modifier (Safety-aware High-Level Synthesis Solver) may enrich the design with safety features, and may approach an optimized design solution. The solver takes an initial system model (e.g., in C/C++) as input, as well as one or more other variables such as environment conditions, constraints (design, safety), target technology and (non-functional requirements. The safety feature optimization may be supported by a safety building block library containing various safety concepts. The output is a system design enhanced with optimized safety measures, which is then synthesized by an HLS tool; the system design may still be in the form of a (modified) high-level specification. A resulting output, e.g., a bitfile (which may be based on an RTL model), may then be loaded into, and/or implemented in, a device such as an integrated circuitry or processing circuitry, e.g., FPGA, SoC, or taken as reference for ASIC design.

Moreover, fast design iterations in case of change request are enabled (e.g., in case of changes on design parameters, environment conditions, etc.). Optimized design due to optimized safety measures may be facilitated.

In general, circuitry may comprise integrated circuitry. Integrated circuitry or processing circuitry may comprise one or more processors and/or controllers (e.g., microcontrollers), and/or ASICs (Application Specific Integrated Circuitry) and/or FPGAs (Field Programmable Gate Array) and/or SOCs (System-on-a- Chip), or similar. It may be considered that processing circuitry comprises, and/or is (operatively) connected or connectable to one or more memories or memory arrangements or storage media, which may be non-transitory. A storage medium or memory arrangement may comprise one or more memories. A memory may be adapted to store digital information. Examples for memories comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). Integrated circuitry may in general provide a set of instructions; the instructions provided may be called and/or used, and/or be available for calling and/or using, e.g., when executing an application and/or processing input, e.g., to provide an output.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: Model modifier/Safety-aware solver
- 105: Initial system model
- 110: Information pertaining to functional requirements
- 115: Information pertaining to environment conditions
- 120: Information pertaining to design constraints
- 125: Information pertaining to target technology
- 130: Information pertaining to safety constraints
- 135: Information pertaining to non-functional constraints
- 140: Information pertaining to safety functionality/database
- 200: Modified system model
- 300: HLS tool
- 400: target design/device

## Claims

1. Method for an automated design process, the method comprising:
obtaining (A10) an initial high-level specification (105) of a design target;
modifying (A12) the initial high-level specification (105) to obtain a modified high-level specification (200), wherein the modifying is based on information pertaining to safety constraints (130, 135) applicable to the design target and based on information pertaining to safety functionality (140);
providing (A14) the modified high-level specification (200) as output.

2. Method according to claim 1, wherein the modifying is based on information pertaining to functional requirements (110), and/or environment conditions (115), and/or design constraints (120), and/or target technology (125).

3. Method according to one of the preceding claims, wherein the initial high-level specification and/or the modified high-level specification is in C/C++ and/or SystemC and/or MATLAB format.

4. Method according to one of the preceding claims, the method further comprising performing High-Level Synthesis based on the modified high-level specification.

5. Method according to one of the preceding claims, wherein modifying is performed by a model modifier (100).

6. Method according to one of the preceding claims, wherein information pertaining to safety functionality pertains to a voter functionality, and/or redundancy, and/or diversity, and/or lock-step functionality, and/or watchdog functionality.

7. Method according to one of the preceding claims, wherein modifying comprises adding safety functionality to the initial high-level specification.

8. Method according to one of the preceding claims, wherein the modified high-definition specification contains all functionality of the initial high-definition specification.

9. Computer system for automated design, the computer system being adapted to perform a method according to one of claims 1 to 8.

10. Computer program product, the computer program product comprising instructions causing processing circuitry and/or a computer system to perform a method according to one of claims 1 to 8

11. Storage medium storing a computer program product according to claim 10.
